# EUROPEAN PATENT SPECIFICATION

(11) **EP 4 391 187 B1**
(45) Date of publication and mention of the grant of the patent: **02.12.2026**
(21) Application number: 23816286.1
(22) Date of filing: 24.05.2023
(51) Int. Cl.: H01M 50/342, H01M 50/574, H01M 50/593, H01M 50/595, H01M 50/186, H01M 50/152, H01M 50/171, H01M 50/578, H01M 50/167

(54) **SECONDARY BATTERY**
SEKUNDÄRBATTERIE
BATTERIE SECONDAIRE

(30) Priority: 02.06.2022 KR 20220067812
(43) Date of publication of application: 26.06.2024
(73) Proprietor: LG Energy Solution, Ltd., Seoul 07335 (KR)
(72) Inventor: KIM, Dongchan, Daejeon 34122 (KR); KIM, Jun Wan, Daejeon 34122 (KR); LEE, Younghak, Daejeon 34122 (KR)
(74) Representative: Goddar, Heinz J.
(86) International application number: PCT/KR2023/007085
(87) International publication number: WO 2023/234625

(56) References cited:
- WO-A1-2019/082711
- KR-A- 20080 053 538
- KR-A- 20090 099 273
- KR-A- 20190 131 794
- KR-A- 20190 131 794
- KR-A- 20190 138 509
- KR-B1- 100 865 405
- KR-B1- 100 865 405

## Description

### [Technical Field]

The present invention relates to a secondary battery, and more particularly, to a secondary battery in which deflection of a vent part of a cylindrical battery is improved.

### [Background Art]

With the technology development and increase in demand for mobile devices, rechargeable secondary batteries have been widely used as energy sources for various mobile devices. In addition, the secondary batteries are also attracting attention as energy sources for electric vehicles, hybrid vehicles, etc., which are proposed as a solution to air pollution of existing gasoline vehicles or diesel vehicles.

The secondary battery is classified into a coin type battery, a cylindrical battery, a prismatic battery, and a pouch type battery according to a shape of a battery case in which the electrode assembly is embedded.

Among them, the cylindrical battery is configured to include an electrode assembly, a cylindrical can accommodating the electrode assembly, a cap assembly, and a gasket.

In the electrode assembly, a cathode, an anode, and a separator interposed therebetween are wound in a cylindrical shape, and cathode and anode tabs may be drawn out from the cathode and anode, respectively. Normally, the cathode tab may be drawn out upward and the anode tab may be drawn out downward.

The can is a metal container having a substantially cylindrical shape in a cylindrical secondary battery, and may be formed by a processing method such as deep drawing. Therefore, it is also possible that the can itself serves as a terminal.

The cap assembly closes an open upper portion of the can, and the cap assembly may include a vent, a current interrupt device, and the like from bottom to top. The cathode of the electrode assembly may be electrically connected to the cap assembly through the cathode tab drawn out upward, and the anode may be bonded to a bottom surface of the can through the anode tab drawn out downward. Of course, the cap assembly can be designed by reversing the polarity of the electrodes.

A gasket is positioned between the cap assembly and the can to insulate and seal therebetween.

During a cylindrical crimping/cylindrical sizing (CCR/CSZ) process of such a cylindrical battery, a dispersion of a H0 dimension may increase. The increase in the H0 dimension increases the amount of deflection of a vent, which may cause a decrease in short-circuit pressure.

Accordingly, a study on a method for improving deflection of a vent is required.

KR 20190131794 A discloses a secondary battery which minimizes deformation of a surrounding portion of a safety vent. According to embodiments of the disclosure, the secondary battery comprises: a cylindrical battery can; a cap assembly to seal an opening part of an upper end of the battery can; and a beading unit dented inwards from the outside on an upper portion of the battery can. The cap assembly includes: a top cap sealing the opening part and forming an anode terminal; a crimping gasket made of an insulator and installed along an inner circumferential surface of the opening part to seal the opening part; a safety vent including a surrounding portion allowing the outside thereof to be inserted into the crimping gasket and having a disk ring shape, and a center portion connected to the inside of the surrounding portion to be extended towards a center axis; and a CID filter positioned below the safety vent to block a current when a high voltage is generated in the batter y can. A length ratio of the surrounding portion occupied by a seating portion seated on the beading unit of the battery can based on a longitudinal section including the center axis is higher than%, and the sum of a first length measured from the center in a radial direction and a second length measured in a direction opposite to the radial direction is smaller than% of the diameter of the battery can. WO 2019/082711 A1 discloses a battery per the preamble of claim 1.

### [Disclosure]

### [Technical Problem]

It is an object of the present invention to provide a secondary battery having an optimally shaped vent part capable of solving the problem of deflection of a vent part occurring during a CCR/CSZ process of a cylindrical battery.

### [Technical Solution]

To achieve the object, the present invention provides a secondary battery according to independent claim 1. Advantageous embodiments of the secondary battery are subject to the dependent claims and are outlined herein below.

The secondary battery includes an electrode assembly; a can that accommodates the electrode assembly; a cap assembly that includes a vent, a current interrupt device (CID) filter positioned under the vent, and a CID gasket positioned at one end of the current interrupt device filter to close an open upper portion of the can; and a gasket that is compressed while interposed between the cap assembly and the upper portion of the can to maintain insulation and sealing between the cap assembly and the can, wherein an outer surface and upper and lower surfaces of an edge portion of the vent of the cap assembly are in close contact with inner and upper surfaces of the gasket, respectively, and a radius of curvature of a portion where the outer surface and the upper surface of the edge portion of the vent meet is 0.1 to 0.3 mm.

In an embodiment of the present invention, an adhesive layer may be formed on at least a part of the outer surface and the upper surface of the edge portion of the vent or a double-sided adhesive tape may be attached to the outer surface and the upper surface of the edge portion of the vent.

In an embodiment of the present invention, the current interrupt device (CID) filter may be bonded to an electrode tab drawn out upward from one electrode of the electrode assembly.

In an embodiment of the present invention, a metal plate at the edge portion of the vent may be overlapped in two stages by being bent upward by 180°.

In an embodiment of the present invention, the can may have a cylindrical shape, and the vent may have a flat disk shape.

### [Advantageous Effects]

As the secondary battery of the present invention has an optimally shaped vent part, deflection of a vent part occurring during a CCR/CSZ process of a cylindrical battery can be prevented.

### [Brief Description of the Drawings]

FIG. 1 is a partially enlarged cross-sectional view of a cylindrical secondary battery according to an embodiment of the present invention.
FIG. 2 is a partially enlarged cross-sectional view of a cylindrical secondary battery according to another embodiment of the present invention.
FIG. 3 is a schematic diagram illustrating an analysis model according to an embodiment of the present invention.
FIG. 4 is a graph of measured values based on the analysis model according to an embodiment of the present invention.
FIG. 5 is a diagram illustrating a vent VonMises strain rate contour measured based on the analysis model according to an embodiment of the present invention.

### [Best Mode]

Hereinafter, the present invention will be described in detail with reference to the accompanying drawings so that those skilled in the art may easily practice the present invention. However, the present invention may be implemented in various different forms, and is not limited to embodiments described herein.

In order to clearly describe the present invention, parts irrelevant to the description are omitted, and the same reference numerals are assigned to the same or similar components throughout the specification.

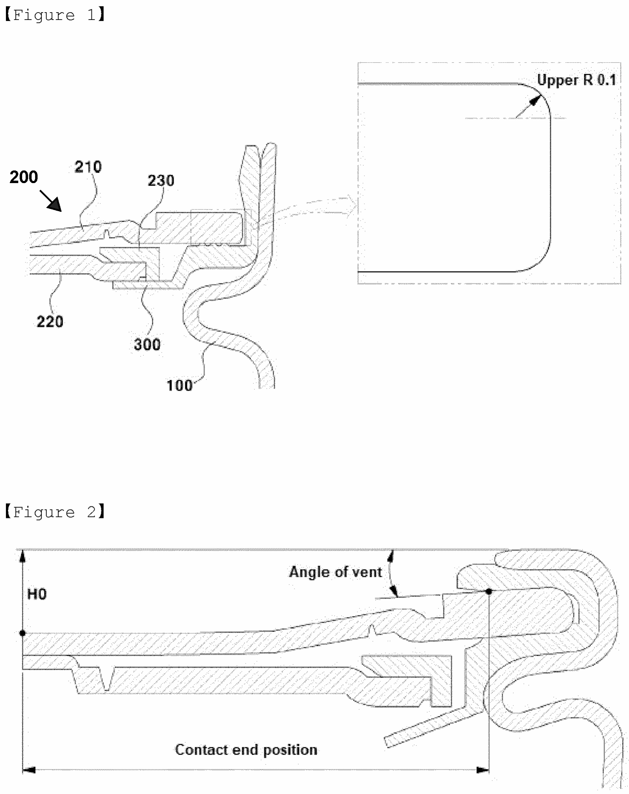

FIG. 1 is a partially enlarged cross-sectional view of a secondary battery according to an embodiment of the present invention.

Referring to FIG. 1, a secondary battery according to an embodiment of the present invention includes an electrode assembly (not shown); a can 100 that accommodates the electrode assembly; a cap assembly that includes a vent 210, a current interrupt device (CID) filter 220 positioned under the vent 210, and a CID gasket 230 positioned at one end of the current interrupt device filter 220 to close an open upper portion of the can 100; and a gasket 300 that is compressed while interposed between the cap assembly and the upper portion of the can 100 to maintain insulation and sealing between the cap assembly and the can 100.

In the secondary battery according to an embodiment of the present invention, the electrode assembly may be made in a so-called "jelly roll" form in which a cathode and an anode are usually formed in a wide plate shape to increase capacitance, and then a separator is positioned between the cathode and anode to insulate the cathode and anode, and the separator, the cathode, and the anode are stacked and wound in a circular shape. The cathode and anode may be formed by applying active material slurry to a current collector made of a metal foil or a metal mesh made of aluminum and copper, respectively. There may be an uncoated part to which the slurry is not applied at a starting end and an end of the current collector in a direction in which an electrode plate is wound. In the uncoated part, one electrode tab is installed on each electrode plate, and one of the electrode tabs may be formed to be drawn out in an upward direction which is a direction of an opening of the cylindrical can and the other may be formed to be drawn out downward from the electrode. However, the embodiment of the present invention is not limited thereto.

In the secondary battery according to the embodiment of the present invention, the can 100 has a cylindrical shape, is a container made of a lightweight conductive metal material such as aluminum or aluminum alloy, and may be formed by a processing method such as deep drawing. The electrode assembly (not shown) may be provided in the cylindrical can. In this case, a center pin (not shown) that prevents the jelly roll from unwinding and serves as a moving passage for internal gas may be inserted into an empty space in the center of the jelly roll.

In the secondary battery according to an embodiment of the present invention, the cap assembly 200 includes the vent 210, the current interrupt device filter 220, and the CID gasket 230, and as shown in FIG. 1, the current interrupt device, the CID gasket 230, and the vent 210 are positioned in order from bottom to top.

In the secondary battery according to the embodiment of the present invention, the vent 210 is positioned above the cap assembly 200. The current interrupt device (CID) 220 is installed under the vent 210 so that a protruding part of the vent 210 is deformed convexly upward by the internal pressure to be broken.

In the secondary battery according to an embodiment of the present invention, the vent 210 may have a flat disk shape.

In the secondary battery according to an embodiment of the present invention, the edge portion of the vent 210 may be overlapped in two stages by bending the metal plate upward by 180°.

In the secondary battery according to an embodiment of the present invention, the current interrupt device filter 220 is positioned under the vent 210 and is designed to be broken according to the deformation of the vent 210.

In the secondary battery according to an embodiment of the present invention, the CID gasket 230 may function to block the current by the current blocking filter as the CID gasket falls due to pressure when the inside of the battery is filled with gas.

In the secondary battery according to an embodiment of the present invention, the gasket 300 is positioned between the upper portion of the can 100 and the cap assembly 200. The gasket 300 is compressed while being interposed between the cap assembly 200 and the upper portion of the can 100 to maintain insulation and sealing between the cap assembly 200 and the can 100. Looking at the process of closing the opening of the can 100, the gasket 300 is inserted into the can 100 to seat the cap assembly 200 on the gasket 300, and then may be subjected to a crimping process. The crimping process is a bending process in which the can 100 is sealed by applying pressure inwardly and downwardly to the upper end of the opening of the cylindrical can , so the can 100, the gasket 300, and the cap assembly 200 are sealed. In some non-claimed implementation, a cap-up (not shown) or the like inserted inside the gasket 300 as a stopper may be used to apply pressure on the upper end of the opening of the cylindrical can.

In the secondary battery according to an embodiment of the present invention, an outer surface and upper and lower surfaces of the edge portion of the vent 210 of the cap assembly 200 are in close contact with the inner and upper surfaces of the gasket 300, respectively. In addition, a radius of curvature of the portion where the outer surface and the upper surface of the edge portion of the vent 210 meet is 0.1 to 0.3mm.

When the radius of curvature of the portion where the outer surface and the upper surface of the edge portion of the vent 210 meet is limited to the above range, the sealing force between the cap assembly 200 and the gasket 300 of the secondary battery according to the present invention may be improved.

In the secondary battery according to an embodiment of the present invention, as the vent 210 upper R value increases, the contact pressure increases (the pressing amount of the gasket increases) due to the decrease in the contact area between the can 100 and the gasket 300 during the secondary crimping, and the position of a contact end between the vent 210 and the gasket 300 becomes short. As a result, the moment of the vent 210 increases while the gasket 300 presses a front end of the vent 210, which increases in a strain rate occurring in the vent 210 to increase an angle of the vent 210 and thus increase a H0 dimension.

In the secondary battery according to an embodiment of the present invention, the increase in contact pressure between the can 100 and the gasket 300 increases pressure applied to the gasket 300 to cause the gasket 300 to be further pressed, thereby increasing the vent 210 VonMises strain rate and increasing the angle of the vent 210.

In the secondary battery according to an embodiment of the present invention, an adhesive layer may be formed on at least a part of the outer surface and the upper surface of the edge portion of the vent 210 or a double-sided adhesive tape may be attached to the outer surface and the upper surface of the edge portion of the vent 210 to further increase the adhesion between the vent 210 and the gasket 300.

In the secondary battery according to an embodiment of the present invention, the current interrupt device (CID) filter 220 may be bonded to the electrode tab drawn out upward from one electrode of the electrode assembly.

Hereinafter, in order to facilitate understanding of the present invention, preferred examples are presented, but the following examples are intended only to illustrate the present invention.

### Example

### 1. Analysis model information

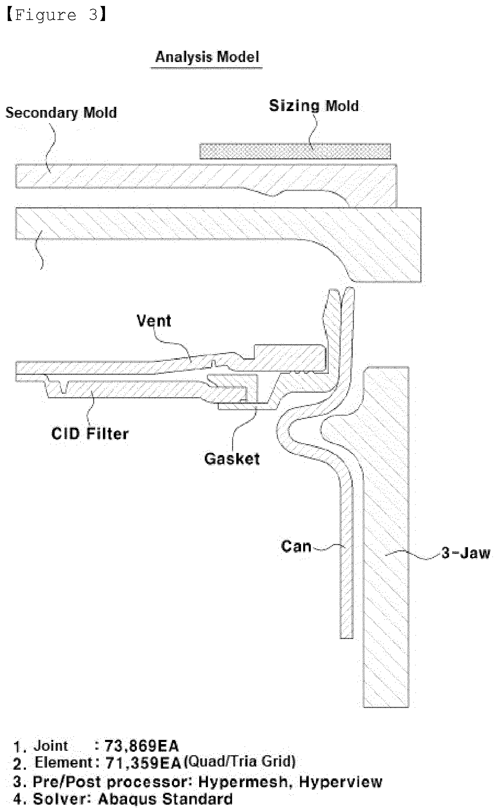

An analysis model was configured as shown in FIG. 3. In addition, load and restraint conditions are as follows. First, 2D cylindrical axis symmetric conditions were applied. Specifically, the CCR process conditions were reflected, a primary CCR height was 3.0 mm, a secondary CCR height was 2.2 mm, and a CSZ fixation conditions were also reflected. 3-Jaw, 1st/2nd mold, and sizing mold displacement movement conditions were given.

The physical properties of materials used are shown in Table 1 below.

**[Table 1]**

| Parts | Material Name | Elastic Modulus (MPa) | Poisson's Ratio | Density (Kg/mm²) |
|---|---|---|---|---|
| Vent | Al 1050H-16 | 54,590 | 0.33 | 7.270E-06 |
| Gasket | PBT | 1,400 | 0.45 | 9.000E-07 |
| Can | NPS | 135,210 | 0.30 | 7.920E-09 |
| CID Filter | Al 1050H-16 | 61,200 | 0.33 | 2.705E-06 |
| 3 Jaw mold | Rigid Body | | | |
| 1^{st} and 2^{nd} Crimping mold | | | | |
| Sizing mold | | | | |

### 2. Analysis result

A model of the cylindrical secondary battery equipped with the can, the vent, the current interrupt device, and the CID gasket was manufactured while changing the curvature radius of the portion where the outer surface and the upper surface of the edge of the vent meet as shown in Table 2.

**[Table 2]**

| | Vent Upper R Value (mm) |
|---|---|
| Example 1 | 0.1 |
| Example 2 | 0.2 |
| Example 3 | 0.3 |
| Comparative Example 1 | 0.4 |

For the above model, 1) H0 dimension, 2) angle of vent, 3) vent VonMises strain rate, 4) contact pressure between a can and a gasket, and 5) position of the contact end between the vent and the gasket were measured, which was shown in the following Table 3.

**[Table 3]**

| | R value of Upper Portion of Vent (mm) | H0 (mm) | Angle of Vent (°) | Vent VonMises Strain Rate (%) | Contact Pressure between Can and Gasket | Position of Contact End between Vent and Gasket (mm) |
|---|---|---|---|---|---|---|
| Example 1 | 0.1 | 1.37 | 1.35 | 0.00071 | 162.45 | 8.37 |
| Example 2 | 0.2 | 1.42 | 2.20 | 0.00119 | 177.06 | 8.34 |
| Example 3 | 0.3 | 1.45 | 2.74 | 0.00143 | 189.81 | 8.31 |
| Comparative Example 1 | 0.4 | 1.50 | 3.64 | 0.00156 | 215.43 | 8.21 |

Looking at the results of Table 3, it can be seen that the increase in the contact pressure between the can and the gasket increases the pressure applied to the gasket to cause the gasket to be further pressed, thereby increasing the vent VonMises strain rate and thus increasing the angle of the vent. When the position of the contact end between the vent and the gasket becomes short, the gasket presses the front end of the vent, so it can be seen that the vent moment increases.

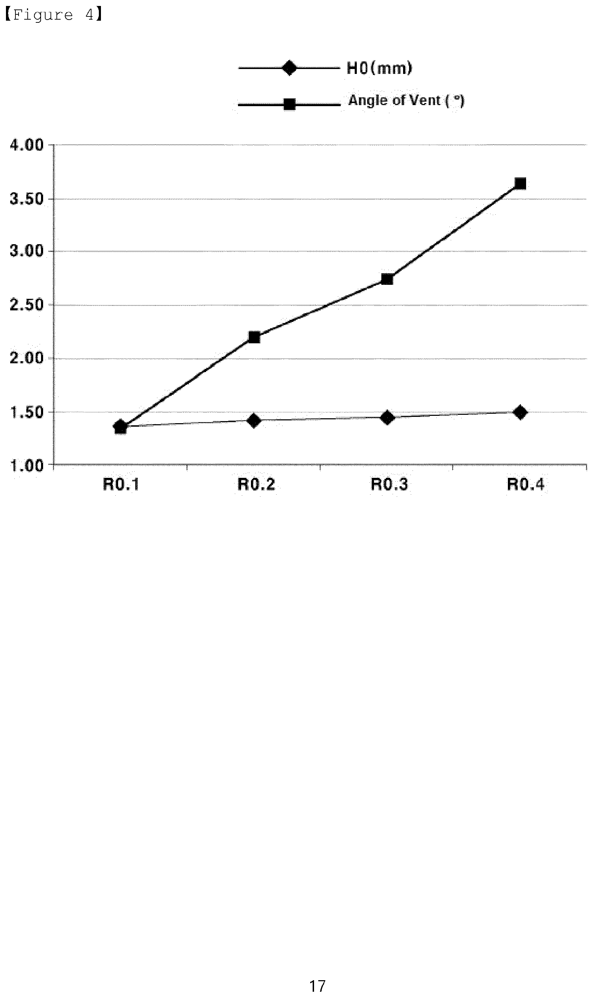

FIG. 4 showed the H0 value and the angle (°) value according to the change in the vent upper R value. The angle of the vent increases as the upper vent R value increased, so the H0 dimension tended to increase. Specifically, in the case of Comparative Example 1 having a vent upper R value of 0.4 mm, it can be seen that the vent upper R value increases by about 9.5% compared to Example 1 having a vent upper R value of 0.1 mm. Therefore, since the H0 dimension increases as the vent upper R value increases, it is determined that the R value management of the vent parts is necessary to reduce the H0 dispersion.

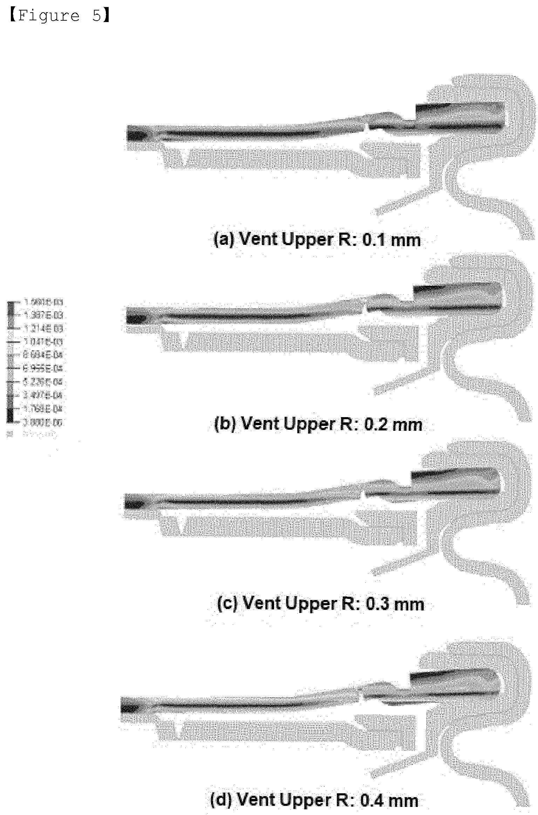

FIG. 5 showed the measured vent VonMises strain rate contour after the secondary crimping. Through this, as the vent upper R value increases, the contact pressure increases (the pressing amount of the gasket increases) due to the decrease in the contact area between the can and the gasket during the secondary crimping, and the contact end position between the vent and gasket becomes short. As a result, the vent moment increased as the gasket pressed the front end of the vent, which was determined that the angle of the vent increases due to the increase in the strain rate occurring in the vent to increase the H0 dimension.

### [Description of Reference Signs]

- 100:: Can
- 200:: Cap assembly
- 210:: Vent
- 220:: Current interrupt device filter
- 230:: CID gasket
- 300:: Gasket

## Claims

1. A secondary battery, comprising:
an electrode assembly;
a can (100) that accommodates the electrode assembly;
a cap assembly that includes a vent (210), a current interrupt device, CID, filter (220) positioned under the vent (210), and a CID gasket (230) positioned at one end of the current interrupt device filter (220) to close an open upper portion of the can (100); and
a gasket (300) that is compressed while interposed between the cap assembly and the upper portion of the can (100) to maintain insulation and sealing between the cap assembly and the can (100),
wherein an outer surface and upper and lower surfaces of an edge portion of the vent (210) of the cap assembly are in close contact with inner and upper surfaces of the gasket (300), respectively,
**characterized in that**
a radius of curvature of a portion where the outer surface and the upper surface of the edge portion of the vent (210) meet is 0.1 to 0.3 mm.

2. The secondary battery of claim 1, wherein an adhesive layer is formed on at least a part of the outer surface and the upper surface of the edge portion of the vent (210) or a double-sided adhesive tape is attached to the outer surface and the upper surface of the edge portion of the vent (210).

3. The secondary battery of claim 1, wherein the CID filter (220) is bonded to an electrode tab drawn out upward from one electrode of the electrode assembly.

4. The secondary battery of claim 1, wherein a metal plate at the edge portion of the vent (210) is overlapped in two stages by being bent upward by 180°.

5. The secondary battery of claim 1, wherein the can (100) has a cylindrical shape, and the vent (210) has a flat disk shape.

## Patentansprüche

1. Sekundärbatterie, umfassend:
eine Elektrodenanordnung;
eine Dose (100), die die Elektrodenanordnung aufnimmt;
eine Kappenanordnung, die eine Entlüftung (210), ein unter der Entlüftung (210) positioniertes Filter (220) einer Stromunterbrechungsvorrichtung, CID, und eine CID-Dichtung (230), die an einem Ende des Filters (220) der Stromunterbrechungsvorrichtung positioniert ist, um einen offenen oberen Abschnitt der Dose (100) zu schließen, beinhaltet; und
eine Dichtung (300), die zusammengedrückt wird, während sie zwischen der Kappenanordnung und dem oberen Abschnitt der Dose (100) angeordnet ist, um die Isolierung und Abdichtung zwischen der Kappenanordnung und der Dose (100) aufrechtzuerhalten,
wobei eine Außenfläche und eine obere und eine untere Fläche eines Randabschnitts der Entlüftung (210) der Kappenanordnung in engem Kontakt mit einer Innen- bzw. einer oberen Fläche der Dichtung (300) stehen,
**dadurch gekennzeichnet, dass**
ein Krümmungsradius eines Abschnitts, an dem sich die Außenfläche und die obere Fläche des Randabschnitts der Entlüftung (210) treffen, 0,1 bis 0,3 mm beträgt.

2. Sekundärbatterie nach Anspruch 1, wobei eine Klebstoffschicht auf mindestens einem Teil der Außenfläche und der oberen Fläche des Randabschnitts der Entlüftung (210) ausgebildet ist oder ein doppelseitiges Klebeband an der Außenfläche und der oberen Fläche des Randabschnitts der Entlüftung (210) angebracht ist.

3. Sekundärbatterie nach Anspruch 1, wobei das CID-Filter (220) mit einer Elektrodenlasche verbunden ist, die von einer Elektrode der Elektrodenanordnung nach oben herausgezogen ist.

4. Sekundärbatterie nach Anspruch 1, wobei eine Metallplatte an dem Randabschnitt der Entlüftung (210) in zwei Stufen überlappt ist, indem sie um 180° nach oben gebogen ist.

5. Sekundärbatterie nach Anspruch 1, wobei die Dose (100) eine zylindrische Form aufweist und die Entlüftung (210) eine flache Scheibenform aufweist.

## Revendications

1. Batterie secondaire, comprenant :
un ensemble électrode ;
un boîtier (100) qui reçoit l'ensemble électrode ;
un ensemble capuchon qui inclut un évent (210), un filtre (220) de dispositif d'interruption de courant, CID, positionné sous l'évent (210), et un joint de CID (230) positionné au niveau d'une extrémité du filtre de dispositif d'interruption de courant (220) afin de fermer une portion supérieure ouverte du boîtier (100) ; et
un joint (300) qui est comprimé pendant qu'il est interposé entre l'ensemble capuchon et la portion supérieure du boîtier (100) afin de maintenir l'isolement et l'étanchéité entre l'ensemble capuchon et le boîtier (100),
dans laquelle une surface externe ainsi que des surfaces supérieure et inférieure d'une portion de bord de l'évent (210) de l'ensemble capuchon sont en contact étroit avec des surfaces interne et supérieure du joint (300), respectivement,
**caractérisée en ce que**
un rayon de courbure d'une portion où la surface externe et la surface supérieure de la portion de bord de l'évent (210) se rejoignent est de 0,1 à 0,3 mm.

2. Batterie secondaire de la revendication 1, dans laquelle une couche adhésive est formée sur au moins une partie de la surface externe et la surface supérieure de la portion de bord de l'évent (210) ou un ruban adhésif double face est attaché à la surface externe et la surface supérieure de la portion de bord de l'évent (210).

3. Batterie secondaire de la revendication 1, dans laquelle le filtre de CID (220) est liaisonné à une languette d'électrode qui est extraite et dirigée vers le haut depuis une électrode de l'ensemble électrode.

4. Batterie secondaire de la revendication 1, dans laquelle une plaque en métal au niveau de la portion de bord de l'évent (210) est chevauchée en deux étapes du fait qu'elle est courbée vers le haut de 180°.

5. Batterie secondaire de la revendication 1, dans laquelle le boîtier (100) a une forme cylindrique, et l'évent (210) a une forme en disque plat.
